# EUROPÄISCHE PATENTSCHRIFT

(11) **EP 3 290 237 B1**
(45) Veröffentlichungstag und Bekanntmachung des Hinweises auf die Patenterteilung: **24.03.2021**
(21) Anmeldenummer: 17182734.8
(22) Anmeldetag: 24.07.2017
(51) Int. Cl.: B60C 15/00, B60C 9/08, B60C 9/00, B60C 9/04

(54) **FAHRZEUGLUFTREIFEN**
PNEUMATIC TYRES FOR A VEHICLE
PNEUMATIQUES DE VÉHICULE

(30) Priorität: 06.09.2016 DE 102016216840
(43) Veröffentlichungstag der Anmeldung: 07.03.2018
(73) Patentinhaber: Continental Reifen Deutschland GmbH, 30165 Hannover (DE)
(72) Erfinder: Justine, Carole, 31535 Scharrel (DE); Funk-Friedek, Sascha, 30449 Hannover (DE)
(74) Vertreter: Continental Corporation

(56) Entgegenhaltungen:
- EP-A1- 1 798 073
- EP-A1- 2 042 347
- EP-A1- 2 692 547
- EP-A2- 1 491 365
- WO-A1-98/56601
- DE-A1-102010 017 107
- US-A1- 2009 095 391

## Beschreibung

Die Erfindung betrifft einen Fahrzeugluftreifen für PKW mit einem Gürtelpaket, Wulstkernen und einer einlagigen Radialkarkasse, welche die Wulstkerne von radial innen nach radial außen umläuft und je einen Karkasshochschlag aufweist, wobei das Ende des je einen Karkasshochschlages zumindest bis unter die Kanten des Gürtelpaketes reicht und wobei die Karkasse textile Corde der Konstruktion x3 enthält, wobei jeder Cord eine Gesamtfeinheit zwischen 1600 dtex und 10100 dtex aufweist und wobei die einzelnen Garne eine Feinheit zwischen 550 dtex und 3340 dtex aufweisen.

Die Karkasse weist eine sogenannte C-Lagenkonstruktion auf und bildet aufgrund der Winkel-Anordnung der Festigkeitsträger einen Kreuzverband in der Seitenwand. Eine derartige Karkasse mit Festigkeitsträgern, welche einen Winkel zwischen 68° und 86° mit der Umfangsrichtung einschließen, fällt unter den Begriff "Radialkarkasse".

Ein vorgenannter Fahrzeugluftreifen ist hinreichend bekannt, beispielsweise aus der EP 2 042 347 A1. Dieser Fahrzeugluftreifen weist daher eine Karkasse mit C-Lagenkonstruktion auf, welche Corde der Konstruktion x3 enthält. Die Corde bestehen aus 50% (Massen%) Polyketon, bevorzugt aus 100% Polyketon, und weisen ein definiertes Spannungsverhalten beim thermischen Schrumpfen auf, wodurch die Notlaufeigenschaften des Reifens verbessert sein sollen.

Aus der US 2009 095 391 A1 ist ein Niederquerschnitts-Reifen, insbesondere für SUVs, mit einer einlagigen Karkasse mit C-Lagenkonstruktion bekannt. Die Härte des Gummimateriales der Kernreiter sowie die Höhe, bis in welche die Kernreiter in radialer Richtung reichen, ist definiert. Der Reifen soll eine gute Haltbarkeit aufweisen.

Aus der EP 1 798 073 A1 ist ein Fahrzeugluftreifen mit Notlaufeigenschaften mit einer Karkasse mit C-Lagenkonstruktion bekannt. Die Karkasse weist Corde aus Aramid- oder Polyethylennaphthalat auf, welche unter einem Winkel von 70° bis 90° zur Umfangsrichtung verlaufen. Eine solche Karkasse soll die Notlaufeigenschaften verbessern.

Die DE 10 2010 017 107 A1 offenbart einen Kord für eine Karkasslage bestehend aus wenigstens zwei Garnen aus nicht-metallischen Materialien, die miteinander endverdreht sind, wobei wenigstens ein Garn aus recyceltem PET besteht. Ein solcher Kord ist umweltfreundlich und besteht aus ressourcenschonendem Material.

Aus der WO 98/56601 A1 ist ein Fahrzeugluftreifen mit zwei Gürtellagen und einer Spulbandage bekannt. Die Spulbandage enthält Filamente oder Corde aus PET, Aramid, PEN oder PVA und die Gürtellagen enthalten Corde aus Rayon. Der Reifen soll kostengünstig herstellbar sein und ein geringes Gewicht aufweisen.

Die EP 1 491 365 A2 offenbart einen weiteren Reifen mit Notlaufeigenschaften. Zumindest ein Bauteil des Reifens, insbesondere die Karkasse, enthält einen Kord aus zumindest zwei verdrillten Polyestergarnen, welche mit einer wässrigen, Epoxidharz enthaltenden Emulsion beschichtet sind.

Ferner ist aus der EP 2 692 547 A1 ein Fahrzeugluftreifen mit einem Gürtelverband bekannt, welcher mit einer Gürtelbandage bedeckt ist, die einen Polyesterkord aus zwei mit einem Haftvermittler beschichteten Polyesterfilamenten enthält. Der Reifen soll unter anderem eine hohe Hitzebeständigkeit aufweisen, was für die Notlaufeigenschaften des Reifens günstig sein soll.

Die Karkasse weist in eine Kautschukmischung eingebettete Festigkeitsträger auf. Durch die Festigkeit der Karkasse ist gewährleistet, dass diese die Wechselspannungen aufnimmt, die in den Karkasscorden durch Luftdruck und Belastung auftreten. Eine solche Karkasse verfügt des Weiteren über eine Festigkeitsreserve, die bezüglich Sicherheit gegen Platzdruck ein Mehrfaches von dem beträgt, was erforderlich ist.

Die Corde, die in der Karkasse von PKW-Reifen eingesetzt werden, sind vorwiegend textile Corde der Konstruktion x2. Das heißt, dass jeder Cord der Karkasse aus zwei miteinander verdrehten Garnen besteht.

Während des Abplattvorganges beim Durchlaufen der Bodenaufstandsflächen geraten diese Karkasscorde im Bereich der Seitenwand -je nach Innendruck- mehr oder weniger unter Kompression. Der Effekt verstärkt sich für Karkasswinkel ungleich 90°. Corde unter Kompression im Reifen versuchen sich unter Druck zu öffnen. Dieser Effekt ist als sogenannter "Birdcage-effect" bekannt. Die daraus resultierenden Druckspannungen werden im Bereich der Twistgrenze Garn zu Garn über die cordumschließende Kautschukmatrix abgebaut, welche exakt an dieser Stelle brechen kann.

Der Erfindung liegt die Aufgabe zugrunde, einen Fahrzeugluftreifen mit einer Karkasse mit C-Lagen-Konstruktion zur Verfügung zu stellen, welcher in seiner Dauerhaltbarkeit verbessert ist.

Gelöst wird die gestellte Aufgabe erfindungsgemäß dadurch, dass die textilen Corde der Karkasse in einem Winkel zwischen 68° und 86° in Bezug auf die Umfangsrichtung angeordnet sind, wobei der Twistfaktor eines jeden Garnes oder des Cordes in einem Bereich von 200 bis 275 liegt, mit Twistfaktor = Twist [t/m] × (Feinheit [tex] / 1000)^{1/2}.

Hierdurch werden die resultierenden Druckspannungen über drei - anstatt wie bei einem Cord der Konstruktion x2 über zwei - Twistgrenzenpunkte reduziert, die Kautschukmatrix wird weniger an der Twistgrenze Garn zu Garn beansprucht, wodurch die Dauerhaltbarkeit verbessert ist. Die drei Garne des Cordes der Konstruktion x3 bilden im Querschnitt eine sternförmige Trennungslinie, wodurch die Ermüdungsbeständigkeit im Vergleich zu einer Cordkonstruktion x2 mit einer symmetrischen, linienförmigen Trennungslinie verbessert ist. Ist der Twistfaktor höher, weist der Cord eine bessere Ermüdungsbeständigkeit, jedoch einen geringeren E-Modul auf. Der angegebene Bereich stellt daher einen optimalen Kompromiss zwischen der erhaltenen Ermüdungsbeständigkeit und dem E-Modul dar.

In einer vorteilhaften Weiterbildung der Erfindung besteht der Cord aus PET oder aus Rayon.

Vorteilhaft ist es, wenn die Corde in einer Dichte von 40 bis 150 epdm in der Karkasse angeordnet sind. Hierdurch wird eine optimale Festigkeit der Karkasse erhalten.

Nachfolgend sind bevorzugte Ausführungen eines erfindungsgemäßen Fahrzeugreifens aufgeführt, bei denen der in der Karkasse eingesetzte Cord
Ausführungsbeispiel 1:
   aus Rayon besteht, die Konstruktion 1840x3 mit einem Twistfaktor von 260 aufweist und in einer Dichte von 60 bis 100 epdm, bevorzugt in einer Dichte von 85 epdm in der Karkasse angeordnet ist.
Ausführungsbeispiel 2:
   aus Rayon besteht, die Konstruktion 2440x3 mit einem Twistfaktor von 260 aufweist und in einer Dichte von 60 bis 90 epdm, bevorzugt in einer Dichte von 75 epdm in der Karkasse angeordnet ist.
Ausführungsbeispiel 3:
   aus Polyester besteht, die Konstruktion 1440x3 mit einem Twistfaktor von 200 aufweist und in einer Dichte von 60 bis 115 epdm, bevorzugt in einer Dichte von 95 epdm in der Karkasse angeordnet ist.
Ausführungsbeispiel 4:
   aus Polyester besteht, die Konstruktion 2200x3 mit einem Twistfaktor von 200 aufweist und in einer Dichte von 60 bis 90 epdm, bevorzugt in einer Dichte von 75 epdm in der Karkasse angeordnet ist.

## Patentansprüche

1. Fahrzeugluftreifen für PKW mit einem Gürtelpaket, Wulstkernen und einer einlagigen Radialkarkasse, welche die Wulstkerne von radial innen nach radial außen umläuft und je einen Karkasshochschlag aufweist, wobei das Ende des je einen Karkasshochschlages zumindest bis unter die Kanten des Gürtelpaketes reicht und wobei die Karkasse textile Corde der Konstruktion x3 enthält, wobei jeder Cord eine Gesamtfeinheit zwischen 1600 dtex und 10100 dtex aufweist und wobei die einzelnen Garne eine Feinheit zwischen 550 dtex und 3340 dtex aufweisen,
**dadurch gekennzeichnet,**
**dass** die textilen Corde der Karkasse in einem Winkel zwischen 68° und 86° in Bezug auf die Umfangsrichtung angeordnet sind, wobei der Twistfaktor eines jeden Garnes oder des Cordes in einem Bereich von 200 bis 275 liegt,
mit Twistfaktor = Twist [t/m] × (Feinheit [tex] / 1000)^{1/2}.

2. Fahrzeugluftreifen nach Anspruch 1, **dadurch gekennzeichnet, dass** der Cord aus PET oder aus Rayon besteht.

3. Fahrzeugluftreifen nach Anspruch 1 oder 2, **dadurch gekennzeichnet, dass** die Corde in einer Dichte von 40 bis 150 epdm in der Karkasse angeordnet sind.

4. Fahrzeugluftreifen nach einem der Ansprüche 1 bis 3, **dadurch gekennzeichnet, dass** der Cord aus Rayon besteht, die Konstruktion 1840x3 mit einem Twistfaktor von 260 aufweist und in einer Dichte von 60 bis 100 epdm, bevorzugt in einer Dichte von 85 epdm in der Karkasse angeordnet ist.

5. Fahrzeugluftreifen nach einem der Ansprüche 1 bis 3, **dadurch gekennzeichnet, dass** der Cord aus Rayon besteht, die Konstruktion 2440x3 mit einem Twistfaktor von 260 aufweist und in einer Dichte von 60 bis 90 epdm, bevorzugt in einer Dichte von in einer Dichte von 75 epdm in der Karkasse angeordnet ist.

6. Fahrzeugluftreifen nach einem der Ansprüche 1 bis 3, **dadurch gekennzeichnet, dass** der Cord aus Polyester besteht, die Konstruktion 1440x3 mit einem Twistfaktor von 200 aufweist und in einer Dichte von 60 bis 115 epdm, bevorzugt in einer Dichte von in einer Dichte von 95 epdm in der Karkasse angeordnet ist.

7. Fahrzeugluftreifen nach einem der Ansprüche 1 bis 3, **dadurch gekennzeichnet, dass** der Cord aus Polyester besteht, die Konstruktion 2200x3 mit einem Twistfaktor von 200 aufweist und in einer Dichte von 60 bis 90 epdm, bevorzugt in einer Dichte von in einer Dichte von 75 epdm in der Karkasse angeordnet ist.

## Claims

1. Pneumatic vehicle tyre for passenger cars, with a breaker belt assembly, bead cores and a single-ply radial carcass, which runs around the bead cores from radially inside to radially outside and has a respective carcass turn-up, wherein the end of the respective carcass turn-up reaches at least to under the edges of the breaker belt assembly and wherein the carcass contains textile cords of the construction x3, wherein each cord has a total fineness of between 1600 dtex and 10100 dtex and wherein the individual yarns have a fineness of between 550 dtex and 3340 dtex,
**characterized**
**in that** the textile cords of the carcass are arranged at an angle of between 68° and 86° with respect to the circumferential direction, wherein the twist factor of each yarn or of the cord lies in a range from 200 to 275,
with the twist factor = twist [t/m] × (fineness [tex] /1000)^{1/2}.

2. Pneumatic vehicle tyre according to Claim 1, **characterized in that** the cord consists of PET or of rayon.

3. Pneumatic vehicle tyre according to Claim 1 or 2, **characterized in that** the cords are arranged in the carcass with a density of 40 to 150 epdm.

4. Pneumatic vehicle tyre according to one of Claims 1 to 3, **characterized in that** the cord consists of rayon, has the construction 1840x3 with a twist factor of 260 and is arranged in the carcass with a density of 60 to 100 epdm, preferably with a density of 85 epdm.

5. Pneumatic vehicle tyre according to one of Claims 1 to 3, **characterized in that** the cord consists of rayon, has the construction 2440x3 with a twist factor of 260 and is arranged in the carcass with a density of 60 to 90 epdm, preferably with a density of 75 epdm.

6. Pneumatic vehicle tyre according to one of Claims 1 to 3, **characterized in that** the cord consists of polyester, has the construction 1440x3 with a twist factor of 200 and is arranged in the carcass with a density of 60 to 115 epdm, preferably with a density of 95 epdm.

7. Pneumatic vehicle tyre according to one of Claims 1 to 3, **characterized in that** the cord consists of polyester, has the construction 2200x3 with a twist factor of 200 and is arranged in the carcass with a density of 60 to 90 epdm, preferably with a density of 75 epdm.

## Revendications

1. Pneumatique de véhicule pour voiture particulière, comprenant un ensemble de ceintures, des tringles de talon et une carcasse radiale monocouche qui contourne les tringles de talon radialement de l'intérieur vers l'extérieur et présente respectivement une remontée de carcasse, l'extrémité de ladite une remontée de carcasse respectivement allant au moins jusque sous les bords de l'ensemble de ceintures, et la carcasse contenant des cordes textiles de construction x3, chaque corde présentant un titre total compris ente 1600 dtex et 10100 dtex, et les fils individuels présentant un titre compris entre 550 dtex et 3340 dtex,
**caractérisé en ce que** les cordes textiles de la carcasse sont disposées selon un angle compris entre 68° et 86° par rapport à la direction circonférentielle, le facteur de torsion de chaque fil ou de la corde étant situé dans une plage de 200 à 275, où facteur de torsion = Torsion[t/m] x (titre [tex] /1000)^{1/2}.

2. Pneumatique de véhicule selon la revendication 1, **caractérisé en ce que** la corde est composée de PET ou de rayonne.

3. Pneumatique de véhicule selon la revendication 1 ou 2, **caractérisé en ce que** la corde est disposée dans la carcasse avec une densité de 40 à 150 epdm.

4. Pneumatique de véhicule selon l'une quelconque des revendications 1 à 3, **caractérisé en ce que** la corde est composée de rayonne, la construction 1840x3 présente un facteur de torsion de 260 et est disposée dans la carcasse avec une densité de 60 à 100 epdm, de préférence avec une densité de 85 epdm.

5. Pneumatique de véhicule selon l'une quelconque des revendications 1 à 3, **caractérisé en ce que** la corde est composée de rayonne, la construction 2440x3 présente un facteur de torsion de 260 et est disposée dans la carcasse avec une densité de 60 à 90 epdm, de préférence avec une densité de 75 epdm.

6. Pneumatique de véhicule selon l'une quelconque des revendications 1 à 3, **caractérisé en ce que** la corde est composée de polyester, la construction 1140x3 présente un facteur de torsion de 200 et est disposée dans la carcasse avec une densité de 60 à 115 epdm, de préférence avec une densité de 95 epdm.

7. Pneumatique de véhicule selon l'une quelconque des revendications 1 à 3, **caractérisé en ce que** la corde est composée de polyester, la construction 2200x3 présente un facteur de torsion de 200 et est disposée dans la carcasse avec une densité de 60 à 90 epdm, de préférence avec une densité de 75 epdm.
